# EUROPEAN PATENT APPLICATION

(11) **EP 3 901 297 A1**
(43) Date of publication of application: **27.10.2021**
(21) Application number: 20217799.4
(22) Date of filing: 30.12.2020
(51) Int. Cl.: C22C 19/05, B23P 6/00, C22F 1/10, C23C 24/04, F01D 5/00

(54) **NICKEL-BASED ALLOY REPAIRED MEMBER AND METHOD FOR MANUFACTURING SAME**

(30) Priority: 24.04.2020 JP 2020077053
(71) Applicant: Mitsubishi Power, Ltd., Yokohama-shi, Kanagawa 220-8401 (JP)
(72) Inventor: IZUMI, Takeshi, Yokohama-shi, Kanagawa 220-8401 (JP); OTA, Atsuo, Yokohama-shi, Kanagawa 220-8401 (JP)
(74) Representative: Strehl Schübel-Hopf & Partner

(57) **Abstract**

There is provided a manufacturing method of a Ni-based alloy repaired member having a repair piece formed at a damaged portion of a base material. The base material and the repair piece are made of a high precipitation-strengthened Ni-based alloy material. The manufacturing method includes the steps of: preprocessing a surface of the damaged portion; preparing a Ni-based alloy powder having a predetermined chemical composition; depositing a sprayed piece on the damaged portion by a high-speed collision spraying process using the Ni-based alloy powder; subjecting the sprayed piece to a predetermined heat treatment so that the sprayed piece is thermally refined to a softened sprayed piece; processing the softened sprayed piece into a shaped sprayed piece with a desired shape; and subjecting whole of the shaped sprayed piece and the base material to a predetermined heat treatment so that the shaped sprayed piece is thermally refined to the repair piece.

## Description

### FIELD OF THE INVENTION

The present invention relates to precipitation-strengthened nickel (Ni) based alloy members for use such as high-temperature members in turbines and, in particular, a nickel-based alloy repaired member in which partially damaged portion has been repaired and a method for manufacturing the repaired member.

### DESCRIPTION OF RELATED ART

High-temperature members for use in thermal power generation plants and aircraft turbines, such as gas turbines and steam turbines, are often made of precipitation-strengthened Ni-based alloy materials (also referred to as Ni-based superalloy materials), in which a γ' (gamma prime) phase (e.g., Ni₃(Al,Ti) phase) has been precipitated positively in a γ (gamma) phase, in order to satisfy the mechanical properties required of them to operate in high-temperature environments.

As standard methods for manufacturing turbine high-temperature members such as turbine rotor blades and turbine stator blades, precise casting techniques (specifically, a unidirectional solidification technique and a single-crystal solidification technique) have been conventionally used in terms of creep properties. On the other hand, a hot forging technique has been occasionally used for manufacturing turbine disks and combustor members in terms of tensile properties and fatigue properties.

The operating environment of the turbine is extremely harsh for the high-temperature members, and even Ni-based alloy members with high mechanical properties and high heat resistance may undergo various damages during operation. From the viewpoint of improving the availability factor of the turbine, it has been common practice to replace a damaged high-temperature member with a new high-temperature member at the time of periodic inspection.

However, if the high-temperature members are replaced with slight damage, there is a problem that the maintenance cost of the turbine is greatly increased. Therefore, various methods have been studied in which damaged portions are repaired if the damage is minor and the member that is repaired (hereinafter referred to as a repaired member) is reused.

For example, JP 2009-191716 A (corresponding to US 2010/0205805 A1, EP 2187020 A1) discloses a turbine rotor blade repair method for repairing damage of a fin at a tip of a turbine rotor blade. The method is characterized by comprising: build-up welding a damaged portion of the fin with metal; peening a boundary region between the fin and the portion build-up welded; and thereafter performing solution treatment to repair the damage of the fin of the turbine rotor blade.

JP 2010-203258 A discloses a method for repairing a rotor blade in which fins formed on the outer surface of a chip shroud are repaired. The method comprises the step of build-up welding of powder by using a laser device while blowing heat resistant superalloy powder including 3 weight % or more and 5 weight % or less of Al and 2 weight % or more and 3.5 weight % or less of Ti to a surface of the fins.

According to JP 2009-191716 A, after a damaged portion of the fin is build-up welded, peening is performed on the boundary region between the fin and the build-up welded portion to produce compressive residual stresses in the boundary region, thus reducing the tensile residual stresses generated by welding in the boundary region. As a result, the occurrence of cracks at the boundary region between the fin and the build-up welded portion (i.e. the occurrence of cracks due to welding) can be reduced.

According to JP 2010-203258 A, because a repaired portion has sufficient strength to withstand a force due to rotation of a rotating machine such as a gas turbine, the repaired rotor blade can be reused for a rotating machine such as a gas turbine without any problem, thus enabling to reduce the running cost of rotating machine significantly.

On the other hand, in various turbines, techniques for improving the mechanical properties and heat resistance of turbine high-temperature members are being actively researched and developed. In particular, a high-temperature member made of a high precipitation-strengthened Ni-based alloy material precipitating 30 volume % or more of the γ' phase is widely used in recent turbines.

When repairing a turbine high-temperature member made of such a high precipitation-strengthened Ni-based alloy material, it is desirable to use an equivalent high precipitation-strengthened Ni-based alloy material as a repair material. However, the high precipitation-strengthened Ni-based alloy material has a problem that it is difficult to work the repaired portion by build-up welding into a desired shape since the shapeability thereof is very poor.

Here, if a policy is made to repair the turbine high-temperature member on the premise of reuse, but in case that the repair fails and as a result a new member is to be prepared separately, further cost of the new member is required in addition to the cost for the repair. This brings a problem further increasing the maintenance cost. Therefore, giving priority to prevention of repair failure (giving priority to reusability), a Ni-based alloy material having relatively superior shapeability as a repair material may be adopted (e.g., a Ni-based alloy material precipitating a γ' phase of less than 30 volume %).

This means that the mechanical properties and heat resistance of the repaired portion are lower than those of the base material of the high-temperature member to be repaired, and there is a concern that the same damage will reoccur at the repaired portion. In other words, there is a concern that the same portion will need to be repaired repeatedly.

In order to eliminate the above concerns, it is desired to develop a method capable of repairing with a high yield while using the same high precipitation-strengthened Ni-based alloy material as the base material to be repaired, as described before. In addition, in industrial products there is a strong demand for cost reduction (e.g., improvement of forming/molding processability and improvement of manufacturing yield).

### SUMMARY OF THE INVENTION

The present invention has been made in view of such circumstances. It is an objective of the invention to provide a manufacturing method of a Ni-based alloy repaired member that can be repaired at a high yield and low cost while using a high precipitation-strengthened Ni-based alloy material. Also, another objective is to provide a Ni-based alloy repaired member manufactured by the method.
(I) According to one aspect of the present invention, there is provided a manufacturing method of a Ni-based alloy repaired member in that a repair piece is formed at a damaged portion of a base material. Each of the base material and the repair piece is made of a Ni-based alloy having a chemical composition in which the equilibrium amount of precipitation of a γ' phase precipitating in a γ phase of matrix at 700°C is 30 volume % or more and 80 volume % or less. The manufacturing method includes:
   a damaged portion surface preparation step for preprocessing a surface of the damaged portion;
   an alloy powder preparation step for preparing a Ni-based alloy powder having the chemical composition;
   a sprayed piece formation step for depositing/forming a sprayed piece on the damaged portion by a high-speed collision spraying process using the Ni-based alloy powder;
   a softening heat treatment step for heating the sprayed piece to a temperature equal to or higher than the solvus temperature of the γ' phase but lower than the melting temperature of the γ phase, and then slow-cooling the heated sprayed piece from the temperature to a temperature at least 50°C lower than the γ' phase solvus temperature at a cooling rate of 100°C/h or lower, so that the sprayed piece is thermally refined to a softened sprayed piece in that particles of the γ' phase at least 20 volume % precipitate on grain boundaries of the γ phase grains having an average grain diameter of 50 µm or less;
   a shaping step for processing the softened sprayed piece into a shaped sprayed piece with a desired shape by cold plastic working, warm plastic working and/or machining; and
   a solution and aging heat treatment step for subjecting whole of the shaped sprayed piece and the base material to a solution heat treatment so as to solid-dissolve the γ' phase into the γ phase and subsequently subjecting it to an aging heat treatment so as to precipitate particles of the γ' phase of at least 30 volume % within the γ phase grains, so that the shaped sprayed piece is thermally refined to the repair piece.
      In the above aspect (I) of a manufacturing method of a Ni-based alloy repaired member, the following modifications and changes can be made.
      (i) The high-speed collision spraying process may be a high velocity oxy-fuel spraying, a high velocity air-fuel spraying or a cold spraying.
      (ii) The softened sprayed piece may have a Vickers hardness of 390 Hv or less at a room temperature.
      (iii) The alloy powder preparation step may include an atomization substep for forming the Ni-based alloy powder.
      (iv) The chemical composition may be: 5 mass % to 25 mass % of Cr (chromium); more than 0 mass % to 30 mass % of Co (cobalt); 1 mass % to 8 mass % of Al (aluminum); 1 mass % to 10 mass % of Ti (titanium), Nb (niobium) and Ta (tantalum) in total; 10 mass % or less of Fe (iron); 10 mass % or less of Mo (molybdenum); 8 mass % or less of W (tungsten); 0.1 mass % or less of Zr (zirconium); 0.1 mass % or less of B (boron); 0.2 mass % or less of C (carbon); 2 mass % or less of Hf (hafnium); 5 mass % or less of Re (rhenium); 0.003 mass % to 0.05 mass % of O (oxygen); and residual components of Ni and unavoidable impurities.
      (v) Each of the base material and the repair piece may have a chemical composition in which the solvus temperature of the γ' phase is 1110°C or higher.
      (vi) Each of the base material and the repair piece may have a chemical composition in which the equilibrium amount of precipitation of the γ' phase at 700°C is 45 volume % or more and 80 volume % or less.
      (vii) The based material may be a unidirectional solidification article or a single crystalline solidification article comprising the γ phase, and the solution heat treatment may be a solution/non-recrystallization heat treatment in which the whole of the shaped sprayed piece and the base material is held at a temperature at least 10°C higher than the solvus temperature of the γ' phase but not higher than a temperature that is 10°C lower than the melting point of the γ phase, for a holding duration within a time range in which recrystallized grains of the γ phase do not generate.
      (viii) The holding duration in the solution/non-recrystallization heat treatment step may be within a range from 15 minutes to 2 hours.
(II) According to another aspect of the invention, there is provided a Ni-based alloy repaired member having a repair piece formed at a damaged portion of a base material. Each of the base material and the repair piece is made of a Ni-based alloy having a chemical composition in which the equilibrium amount of precipitation of a γ' phase precipitating in a γ phase of matrix at 700°C is 30 volume % or more and 80 volume % or less. The base material and the repair piece have different microstructures from each other. In the microstructure of the repair piece, crystal grains of the γ phase are equiaxed crystal grains having an average grain diameter of 50 µm or less.
   In the above aspect (II) of a Ni-based alloy repaired member, the following modifications and changes can be made.
   (ix) The chemical composition of the repair piece may be: 5 mass % to 25 mass % of Cr, more than 0 mass % to 30 mass % of Co, 1 mass % to 8 mass % of Al, 1 mass % to 10 mass % of Ti, Nb and Ta in total, 10 mass % or less of Fe, 10 mass % or less of Mo, 8 mass % or less of W, 0.1 mass % or less of Zr, 0.1 mass % or less of B, 0.2 mass % or less of C, 2 mass % or less of Hf, 5 mass % or less of Re, 0.003 mass % to 0.05 mass % of O, and residual components of Ni and unavoidable impurities.
   (x) Each of the base material and the repair piece may have a chemical composition in which the solvus temperature of the γ' phase is 1110°C or higher.
   (xi) Each of the base material and the repair piece may have a chemical composition in which the equilibrium amount of precipitation of the γ' phase at 700°C is 45 volume % or more and 80 volume % or less.
   (xii) The based material may be a unidirectional solidification article or a single crystalline solidification article comprising the γ phase.
   (xiii) In the microstructure of the base material, crystal grains of the γ phase may be unidirectional solidification grains, or crystal grain of the γ phase may be a single-crystal solidification grain.
   (xiv) No recrystallized grains of the γ phase may be present in a microstructure of the base material, and when a GROD (grain reference orientation deviation) value of crystal grains of the γ phase of the base material is measured by electron back scattering diffraction analysis, the GROD value may be equal to or more than 0.4° and equal to or less than 0.6°.
   (xv) No recrystallized grains of the γ phase may be present in a microstructure of the base material, and when a rocking curve of a {200}_{γ-phase} plane of the γ phase crystal grain of the base material is measured by an X-ray diffraction technique, a full width at half maximum of the rocking curve may be within a range from 0.25° to 0.30°.

In the invention, the equilibrium precipitation amount at 700°C and the solvus temperature of the γ' phase and the melting point (solidus temperature) of the γ phase can be calculated thermodynamically based on the chemical composition of the Ni-based alloy material.

### ADVANTAGES OF THE INVENTION

According to the invention, there can be provided a manufacturing method of a Ni-based alloy repaired member capable of being repaired at a high yield and low cost while using a high precipitation-strengthened Ni-based alloy material. In addition, there can be provided a Ni-based alloy repaired member manufactured by the method.

### BRIEF DESCRIPTION OF THE DRAWINGS

FIG. 1 is schematic illustrations showing relationships between a γ phase and a γ' phase contained in a precipitation-strengthened Ni-based alloy material, (a) a case where the γ' phase particle precipitates within the γ phase grain, and (b) another case where the γ' phase particle precipitates on a boundary of the γ phase grain;
FIG. 2 is an exemplary flowchart showing steps of a method for manufacturing a Ni-based alloy repaired member according to the invention;
FIG. 3 is a schematic illustration showing an exemplary change in microstructure from a Ni-based alloy powder used for repairing to the softened sprayed piece in a manufacturing method according to the invention;
FIG. 4 is a schematic illustration showing a perspective view of an exemplary turbine rotor blade as a Ni-based alloy repaired member according to the invention;
FIG. 5 is a schematic illustration showing a cross sectional view of an exemplary turbine rotor as another Ni-based alloy repaired member according to the invention;
FIG. 6A is an electron back scattered diffraction (EBSD) pattern in a cross section of a sprayed piece deposited by means of a low-pressure plasma spraying (LPPS) method using an alloy powder P-1; and
FIG. 6B is another EBSD pattern in a cross section of another sprayed piece deposited by means of a high-velocity oxy-fuel (HVOF) spraying method using the alloy powder P-1.

### DETAILED DESCRIPTION OF THE PREFERRED EMBODIMENTS

### [Basic Concept of the Invention]

In the methods for repairing a turbine rotor blade described in JP 2009-191716 A and JP 2010-203258 A, when processing the shape of the build-up welded portion, electric discharge machining, which is a high-cost processing, is utilized. In other words, in the case that a high precipitation-strengthened Ni-based alloy material is used as a repair material, it would be considered that in the prior art it is difficult to form the repaired portion into a desired shape at low cost.

The inventors consider that if a low-cost method for shaping a high precipitation-strengthened Ni-based alloy material can be developed, a turbine high-temperature member made of a high precipitation-strengthened Ni-based alloy material can be repaired at a lower cost and in a complete shape than before.

Here, there is JP 5869624 B as a technique for forming a high precipitation-strengthened Ni-based alloy material into a desired shape. JP 5869624 B teaches a manufacturing process of a softened article with excellent processability. The manufacturing process includes the steps of: subjecting an ingot of a high precipitation-strengthened Ni-based alloy to hot forging within a two-phase coexistent temperature range of γ phase/γ' phase so as to precipitate particles of a grain-boundary γ' phase in a hot-forged article; and subjecting the obtained hot-forged article to a predetermined heat treatment so as to grow the particles of the grain-boundary γ' phase to 20 volume % or more.

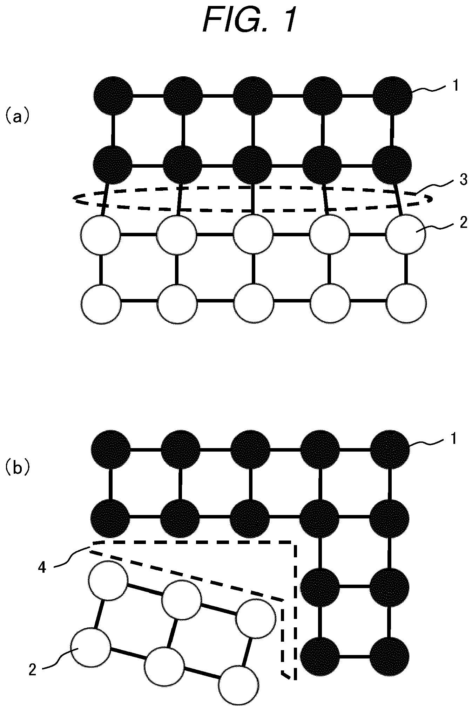

The outline of mechanism of the precipitation-strengthening and softening in the γ' phase precipitation Ni-based alloy material described in JP 5869624 B is as follows. FIG. 1 is schematic illustrations showing relationships between a γ phase and a γ' phase contained in a precipitation-strengthened Ni-based alloy material, (a) a case where the γ' phase particle precipitates within the γ phase grain; and (b) another case where the γ' phase particle precipitates on a boundary of the γ phase grain.

As shown in FIG. 1(a), when the γ' phase particle precipitates within the γ phase grain, atoms 1 made up of a γ phase and atoms 2 made up of a γ' phase configure a coherent interface 3 (i.e., the γ' phase particle precipitates while it is lattice-matched to the γ phase grain). This type of γ' phase is referred to as an "intra-granular γ' phase" (also referred to as a "coherent γ' phase"). Because the intra-granular γ' phase particle and the γ phase grain configure a coherent interface 3, it is deemed that dislocation migration within the γ phase grain can be prevented by the intra-granular γ' phase particle. Accordingly, mechanical strength of the Ni-based alloy material is deemed to increase. It is general that a precipitation-strengthened Ni-based alloy material means the state shown in FIG. 1(a).

On the other hand, as shown in FIG. 1(b), when the γ' phase particle precipitates on a boundary of the γ phase grain (in other words, between/among γ phase grains), the atoms 1 made up of the γ phase and the atoms 2 made up of the γ' phase configure an incoherent interface 4 (i.e., the γ' phase particle precipitates while it is not lattice-matched to the γ phase grain). This type of γ' phase is referred to as a "grain-boundary γ' phase" (also referred to as an "inter-granular γ' phase" and an "incoherent γ' phase"). Because the grain-boundary γ' phase particle and the γ phase grain configure an incoherent interface 4, dislocation migration within the γ phase grain is not prevented. As a result, it is deemed that the grain-boundary γ' phase does not contribute to the strengthening of the Ni-based alloy material. Based on the above, in an Ni-based alloy material, by proactively precipitating the grain-boundary γ' phase particle instead of the intra-granular γ' phase particle, it is possible to make the Ni-based alloy material softened, thereby significantly increasing the processability/moldability.

Here, in the hot forging of high precipitation-strengthened Ni-based alloy materials, it is very important to control temperature of the work material for suppressing undesired precipitation of the γ' phase due to temperature drop during the forging process. Concurrently, it is necessary to apply high pressure to the work material. In the case where technique of JP 5869624 B is applied to repairing a turbine high-temperature member, after forming a build-up welded piece made of a high precipitation-strengthened Ni-based alloy material on a damaged portion (a portion to be repaired) of the high-temperature member, it would be very difficult to hot forge only the build-up welded piece.

In view of the forgoing, the inventors have carried out diligent studies on a method for obtaining a microstructure as shown in FIG. 1(b) without hot forging. As a result, by depositing/forming a sprayed piece on a damaged portion of the high-temperature member by means of a high-speed collision spraying process using a Ni-based alloy powder and followed by subjecting the sprayed piece to a predetermined heat treatment, it has been found possible to obtain the microstructure such as FIG. 1(b), in which the grain-boundary γ' phase of 20 volume % or more are precipitated.

That is, the invention is characterized in that a high-speed collision spraying process of a powder material is utilized for forming the build-up welded piece on the damaged portion. In the invention, the high-speed collision spraying process is a process in which the powder particles to be ejected are collided in a solid state at high speed and deposited on a base material. For example, a high velocity oxy-fuel spraying (HVOF), a high velocity air-fuel spraying (HVAF) or a cold spraying (CS) can be utilized preferably.

In the high-speed collision spraying process, since the kinetic energy of the injected powder particles is very large, the collision energy thereof is also large. Therefore, even high-hardness metal particles are large plastically deformed, thus obtaining a sprayed piece consisting of fine crystal grains deposited. In other words, the use of a high-speed collision spraying process has the advantage of eliminating necessity for precise temperature controlling and high pressure controlling required in the hot forging process.

When such a sprayed piece composed of fine crystal grains is subjected to a predetermined heat treatment, a softened sprayed piece having a grain-boundary γ' phase of 20 volume % or more and a Vickers hardness at room temperature of 390 Hv or less can be obtained. Although the softened sprayed piece obtained is made of a high precipitation-strengthened Ni-based alloy material, it can be processed into a desired shape by cold plastic working, warm plastic working and/or machining.

As a mechanism of the precipitation of grain-boundary γ' phase, the following model can be considered. Diffusion and rearrangement of atoms configuring a γ' phase are essentially necessary for the generation/precipitation of the γ' phase. Therefore, when the γ phase crystal grains are large as those in the cast material, the γ' phase gains are deemed to preferentially precipitate within the γ phase crystal grains where the distance of diffusion and rearrangement of atoms can be short. Besides, it is not denied that the γ' phase particles precipitate on the boundaries of the γ phase crystal grains even in the cast material.

In contrast, as the γ phase crystal grain becomes finer, a distance to the crystal grain boundary becomes shorter, and the grain boundary free energy becomes higher in comparison with the volume free energy of the crystal grain. Therefore, in terms of the free energy, it is deemed to be more advantageous to diffuse atoms configuring the γ' phase along the gain boundary of the γ phase crystal grain and rearrange those atoms on the grain boundary than performing the solid-phase diffusion and rearrangement of those atoms within the γ phase crystal grain. Thus, those atoms configuring the γ' phase are deemed to preferentially and more easily diffuse and rearrange in such a manner.

Here, in order to facilitate the formation of the γ' phase particle on the boundary of the γ phase grain, it is important to keep the γ phase grains fine in a temperature range (e.g., in the vicinity of the solvus temperature of the γ' phase) in which at least atoms configuring the γ' phase can easily diffuse. For example, the γ phase grains have preferably an average grain diameter of 50 µm or less, more preferably 30 µm or less, and still more preferably 20 µm or less. In other words, it is important to suppress the growth of the γ phase grains in the temperature range. Accordingly, the inventors have also carried out intensively studies on a technique for suppressing grain growth of the γ phase crystal grains even in a temperature region above the solvus temperature of the γ' phase.

As a result, by preparing a Ni-based alloy powder containing a predetermined amount of controlled oxygen component, and by depositing/forming a Ni-based alloy sprayed piece of a dense body using the Ni-based alloy powder, it is found there can be obtained a sprayed piece made up of fine crystal grains and possible to suppress grain growth of the γ phase grains even when the sprayed piece is raised up to a temperature equal to or higher than the γ' phase solvus temperature. Furthermore, by slowly cooling the Ni-based alloy sprayed piece made up of fine crystal grains from the temperature equal to or higher than the γ' phase solvus temperature, it is found that the incoherent γ' phase particles are proactively precipitated and grown on the grain boundaries of the γ phase fine crystal grains. The invention is based on these new findings.

Preferred embodiments of the invention will be described hereinafter with reference to the accompanying drawings.

### [Method for Manufacturing Ni-based Alloy Repaired Member]

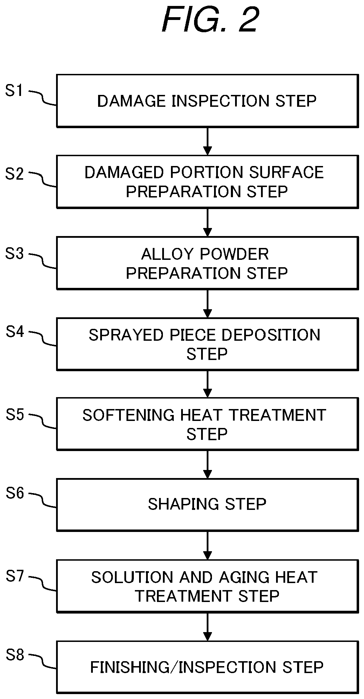

FIG. 2 is an exemplary flowchart showing steps of a method for manufacturing a Ni-based alloy repaired member according to the invention. As shown in FIG. 2, the method for manufacturing a Ni-based alloy repaired member of the invention roughly includes:
a damage inspection step (S1) for determining whether a Ni-based alloy member used for a predetermined time is repairable;
a damaged portion surface preparation step (S2) for conducting a surface preparation of a base material of the damaged portion of the Ni-based alloy member damaged;
an alloy powder preparation step (S3) for preparing an Ni-based alloy powder having a predetermined chemical composition;
a sprayed piece deposition step (S4) for depositing/forming a sprayed piece on the damaged portion by means of a high-speed collision spraying process using the Ni-based alloy powder;
a softening heat treatment step (S5) for subjecting the sprayed piece to a predetermined heat treatment, in which the sprayed piece is heated to a temperature equal to or higher than the solvus temperature of the γ' phase to solid-dissolve the γ' phase into the γ phase and then is slow-cooled from the heating temperature to a temperature at least 50°C lower than the γ' phase solvus temperature at a cooling rate of 100°C/h or lower, so that the sprayed piece is thermally refined to a softened sprayed piece in that particles of a grain-boundary γ' phase at least 20 volume % precipitate;
a shaping step (S6) for processing the softened sprayed piece into a shaped sprayed piece with a desired shape by means of cold plastic working, warm plastic working and/or machining; and
a solution and aging heat treatment step (S7) for subjecting whole of the shaped sprayed piece and the base material to a solution heat treatment so as to solid-dissolve the γ' phase into the γ phase and subsequently subjecting it to an aging heat treatment so as to precipitate particles of the γ' phase of at least 30 volume % within the γ phase grains, so that the shaped sprayed piece is thermally refined to the repair piece. Through the above processes it can be obtained a Ni-based alloy repaired member, such as a turbine high-temperature member, in which a repair piece made of a high precipitation-strengthened Ni-based alloy material is formed thereon.

As stated before, the technique described in JP 5869624 B requires highly accurate control in order to fabricate a softened body in which the grain-boundary γ' phase particles precipitate while the intra-grain γ' phase particles are intentionally remained. On the contrary, in the manufacturing method of the invention, a softened sprayed piece is fabricated by first eliminating the intra-grain γ' phase particles and then precipitating the grain-boundary γ' phase particles. According to the invention, it is possible to obtain the softened sprayed piece by a combination of not-so-difficult sprayed piece deposition step S4 and softening heat treatment step S5. Therefore, the method is more versatile than the technique reported in JP 5869624 B and can achieve low production costs through the entire production processes. Especially, the invention is effective to produce a superhigh precipitation-strengthened Ni-based alloy member which contains at least 45 volume % of γ' phase.

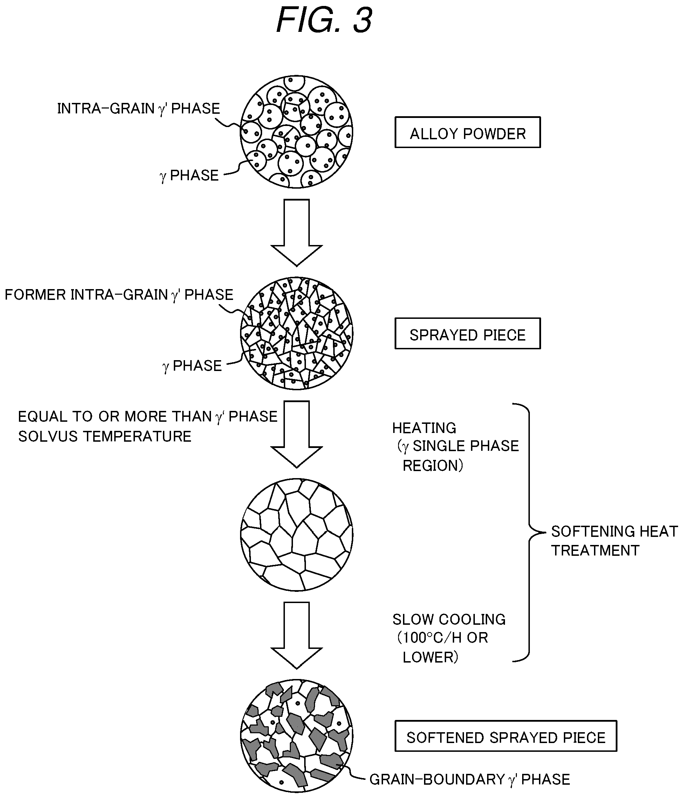

FIG. 3 is a schematic illustration showing an exemplary change in microstructure from a Ni-based alloy powder used for repairing to the softened sprayed piece in the manufacturing method according to the invention. Each step of the manufacturing method will be described in more detail with reference to FIGS 2 and 3.

### (Damage Inspection Step S1)

First, in a periodic inspection of the turbine, there may be conducted a damage inspection step (S1) for determining whether a Ni-based alloy member used for a predetermined time has a damaged portion and whether the damaged portion is repairable. The damage includes, e.g., contact wear due to vibration during operation, oxidation thinning due to high temperature operation, and/or cracks and chips due to collision of undesired flying objects.

In the invention, when a damaged portion is judged unrepairable, the Ni-based alloy member having the damaged portion should be excluded from an object of the next step and thereafter. Besides, when the Ni-based alloy member has a thermal barrier coating (TBC), removing process of the TBC is included in the damage inspection step. Although this step S1 is not an essential step, it is preferable to carry out the step S1.

### (Damaged Portion Surface Preparation Step S2)

Next, in a damaged portion surface preparation step S2, there is conducted a surface preparation on a deteriorated base material of the damaged portion of the Ni-based alloy member to expose a clean surface/fresh surface of the base material. There is no limitation in a method of surface preparation, and any conventional method or technique (e.g., cutting, grinding, shot peening, acid cleaning, etc.) can be appropriately used. By performing the surface preparation, the adhesiveness between the base material and the sprayed pieces to be deposited in the later step is improved.

### (Alloy Powder Preparation Step S3)

In a step S3, a Ni-based alloy powder having a predetermined chemical composition (specifically, a predetermined amount of oxygen component intentionally contained) is prepared. This step S3 is not limited to after the damaged portion surface preparation step S2 and may be performed at any timing as long as it is before a sprayed piece deposition step S4 described later. For example, the alloy powder prepared and stored prior to the damage inspection step S1 may be used.

Basically, any conventional method or technique can be used to prepare the Ni-based alloy powder. For example, a master alloy ingot fabrication substep (S3a) for fabricating a master alloy ingot by mixing, dissolving and casting raw materials to provide a predetermined chemical composition, and an atomization substep (S3b) for forming an alloy powder from the master alloy ingot can be performed.

Control of the oxygen content can be preferably performed in the atomization substep S3b. Any conventional method or technique can be used for the atomization method except for the control of the oxygen content in the Ni-based alloy. For example, a gas atomization technique and a centrifugal force atomization technique can be preferably used while controlling the oxygen content (oxygen partial pressure) in the atomization atmosphere.

The oxygen component content in the Ni-based alloy powder is desirably between 0.003 mass % and 0.05 mass %; more desirably between 0.005 mass % and 0.04 mass %; and further desirably between 0.007 mass % and 0.02 mass %. If the oxygen content is less than 0.003 mass %, the growth of the γ phase crystal grains is not sufficiently suppressed; and if the oxygen content is more than 0.05 mass %, the mechanical strength and ductility of the final Ni-based alloy member deteriorate. Meanwhile, it could be considered that oxygen atoms dissolve in the powder particles or form nuclei or embryos of oxides on the surface or the inside of the powder particles.

From the viewpoints of high precipitation-strengthening and efficient formation of the grain-boundary γ' phase particles, it is preferable that the chemical composition of the Ni-based alloy which enables the γ' phase solvus temperature to become 1020°C or higher be adopted; more preferably, the γ' phase solvus temperature become 1050°C or higher; and further more preferably, the γ' phase solvus temperature become 1110°C or higher. The chemical composition other than the oxygen component will be described in detail later.

The average particle diameter of the Ni-based alloy powder is preferably from 10 µm to 100 µm; more preferably from 10 µm to 80 µm; and even more preferably from 15 µm to 60 µm. The average particle diameter of the Ni-based alloy powder can be measured using, e.g., a laser diffraction particle size distribution analyzer.

If the average particle diameter of the alloy powder becomes less than 10 µm, the particles become too small, making it difficult to sufficiently increase the injection velocity in the next step S4 (in other words, the collision energy of the powder particles becomes small), and thus it becomes difficult to form a dense sprayed piece. If the average particle diameter of the alloy powder becomes more than 100 µm, a very high supply gas pressure is required to ensure sufficient injection velocity, and the system cost and running cost of the high-speed collision spraying device are drastically increased.

Besides, as described in FIG. 3, each particle of the Ni-based alloy powder is basically composed of the γ phase which is a matrix phase and the intra-grain γ' phase precipitated within the crystal grains of the γ phase. Furthermore, the particles of Ni-based alloy powder are deemed to be a mixture of the particles each made up of γ phase single-crystal grain and the particles each made up of γ phase polycrystalline grain. The average γ phase crystal diameter in the particles of the alloy powder is preferably from 5 µm to 50 µm.

### (Sprayed Piece Deposition Step S4)

In a step S4, a dense sprayed piece is deposited/formed on the damaged portion by means of a high-speed collision spraying process using the Ni-based alloy powder prepared in the former step S3. As described before, the high-speed collision spraying process is a process in which the powder particles to be ejected are collided on the base material at a high speed (e.g., at a speed higher than the speed of sound) in a solid state (in a state where they are not melted) and adhered/deposited thereon. For example, the HVOF method, the HVAF method and the CS method (also referred to as the kinetic spray method) can be preferably utilized as the high-speed collision spraying process.

At the time of the sprayed piece being deposited/formed, the powder particles are plastically deformed greatly by the huge collision energy due to the high-speed collision, and with the plastic deformation, a large internal strain is accumulated in each powder particle and new grain boundaries are introduced in some powder particles. Because the newly introduced grain boundaries are pinned by the presence of intra-grain γ' phase particles, the average grain size of the γ phase becomes smaller and the intra-grain γ' phase particles are converted to the grain-boundary γ' phase particles. As a result, the dense sprayed piece composed of the γ phase matrix having an average crystal grain size smaller than that of the alloy powder particles to be used can be obtained.

In addition, by the high-speed collision spraying process, a large residual compressive stress is also generated in the base material portion of the member to be repaired due to the huge collision energy. Because this residual compressive stress acts to close cracks in the base material, it has an effect of suppressing the growth of cracks. In other words, when the damage of the member to be repaired is a relatively small and/or shallow crack, there is an advantage that the crack can be repaired by the deposition/formation of the sprayed pieces according to the invention without removing the crack completely. Meanwhile, in an ordinary build-up welding, the residual tensile stress is generated during solidification of the welding material, so it is necessary to completely remove cracks at the damaged portion.

The average grain diameter of the γ phase can be measured by microstructure observation with an electron microscope and image analysis by means of, e.g., ImageJ as public domain software developed by the National Institutes of Health (NIH) in U.S.A., an electron back scattered diffraction pattern method, etc.

### (Softening Heat Treatment Step S5)

In a step S5, the Ni-based alloy sprayed piece prepared in the previous step S4 is heated to a temperature equal to or higher than the γ' phase solvus temperature in order to dissolve the γ' phase particles into the γ phase grains, and then slowly cooled from that temperature to generate and increase the grain-boundary γ' phase particles, thereby fabricating a softened sprayed piece where the grain-boundary γ' phase particles of 20 volume % or more are precipitated. In order to suppress undesired coarsening of the γ phase grains as much as possible during this process, slow-cooling start temperature is preferably lower than the γ phase solidus temperature; more preferably at most 25°C higher than the γ' phase solvus temperature; and further preferably at most 20°C higher than the γ' phase solvus temperature.

Meanwhile, if the γ phase solidus temperature is lower than the "γ' phase solvus temperature + 25°C" or "γ' phase solvus temperature + 20°C", it is obvious that "less than the γ phase solidus temperature" takes priority. It is preferable that the heat treatment atmosphere is a non-oxidizing atmosphere below atmospheric pressure (e.g., in nitrogen gas, argon gas or vacuum).

When the heating temperature becomes equal to or higher than the solvus temperature of γ' phase, all of the γ' phase particles solid-dissolve into the γ phase to become a γ single phase in terms of the thermal equilibrium theory. In the invention, however, it is not denied that the intra-grain γ' phase does not disappear completely and it slightly remains. For example, if the residual amount of intra-grain γ' phase is 5 volume % or less, it is allowable because the formability in the subsequent shaping step will not be inhibited significantly. The residual amount of intra-grain γ' phase is preferably 3 volume % or less; and more preferably 1 volume % or less. Furthermore, it is important that the γ phase crystal grains maintain a fine state at this stage.

According to the invention, the Ni-based alloy powder prepared in the alloy powder preparation step S3 contains more oxygen in the alloy composition than that in the conventional Ni-based alloys. As for the sprayed piece deposited using such an alloy powder, it could be considered that the contained oxygen atoms chemically-combine with metal atoms of the alloy to form an oxide locally during the formation of the sprayed piece.

The thus formed oxide is deemed to suppress migration of the grain boundaries of the γ phase grains (i.e., suppress growth of the γ phase grains). This means that even if the γ' phase is eliminated in the step S5, it is considered possible to prevent coarsening of the γ phase grains.

As the cooling rate in the slow-cooling process becomes lower, it is more advantageous for the precipitation and growth of the grain-boundary γ' phase particles. The cooling rate is preferably 100°C/h or less; more preferably 50°C/h or less; and further preferably 10°C/h or less. If the cooling rate is higher than 100°C/h, the intra-grain γ' phase particles preferentially precipitate, and the effect of the invention cannot be acquired.

In the case that the γ' phase solvus temperature is relatively low of 1020°C or more and 1110°C or less, end temperature of the slow-cooling is preferably at least 50°C lower than the γ' phase solvus temperature; more preferably at least 100°C lower than the γ' phase solvus temperature; and further preferably at least 150°C lower than the γ' phase solvus temperature. In the case that the γ' phase solvus temperature is relatively high of more than 1110°C, end temperature of the slow-cooling is preferably at least 100°C lower than the γ' phase solvus temperature; more preferably at least 150°C lower than the γ' phase solvus temperature; and further preferably at least 200°C lower than the γ' phase solvus temperature. More specifically, it is preferable that slow-cooling be performed down to a temperature between 1000°C and 800°C, inclusive. The cooling from the slow-cooling end temperature is preferably performed at a high cooling rate in order to suppress the precipitation of the intra-grain γ' phase particles (e.g., the precipitation amount of the intra-grain γ' phase of at most 5 volume %) during the cooling process. For example, water-cooling or gas-cooling is preferable.

A heating method/means in this step S5 is not particularly limited, and the conventional method/means for heat treatment of the Ni-based alloy member can be appropriately utilized. In the heat treatment, whole of the sprayed piece and the base material may be heat-treated, or only the sprayed piece including its vicinity may be heat-treated. As a heat treatment method on only the sprayed piece including its vicinity, e.g., high frequency induction heating can be used. By performing this step S5, there is a secondary effect of improving the degree of adhesion (integration) between the sprayed piece and the base material.

As mentioned before, the strengthening mechanism of the precipitation-strengthened Ni-based alloy material is the result of the formation of a coherent interface between the γ phase and the γ' phase, and an incoherent interface does not contribute to the strengthening. In other words, it is possible to obtain a softened sprayed piece having an excellent formability and processability by reducing the amount of intra-grain γ' phase and increasing the amount of grain-boundary γ' phase.

More specifically, it is preferable that the residual amount of intra-grain γ' phase is 5 volume % or less, and the amount of precipitation of the grain-boundary γ' phase is 20 volume % or more. More preferably, the amount of precipitation of the grain-boundary γ' phase should be 30 volume % or more. The amount of precipitation of the γ' phase can be measured by the microstructure observation and the image analysis.

As an index of formability and processability, it is possible to adopt the Vickers hardness (Hv) of the softened sprayed piece at a room temperature. As for the Ni-based alloy softened sprayed piece obtained through the step S5, it is possible to obtain a Ni-based alloy softened sprayed piece having the room-temperature Vickers hardness of 390 Hv or less even by using a superhigh precipitation-strengthened Ni-based alloy material in which the equilibrium amount of precipitation of the γ' phase at 700°C is 45 volume % or more. It is more preferable for better formability and processability that the room-temperature Vickers hardness is 370 Hv or less; and further more preferably is 350 Hv or less.

### (Shaping Step S6)

In a step S6, the Ni-based alloy softened sprayed piece prepared in the previous step S5 is shaped/formed into a shaped sprayed piece with a desired shape. A shaping/forming method is not particularly limited and any conventional low-cost plastic working and machining can be utilized.

In other words, the softened sprayed piece prepared in the step S5 has the room-temperature Vickers hardness of 390 Hv or less. Therefore, there is no need to use a high-cost special processing method. Easiness of shaping/forming an object to be worked will achieve the reduction of equipment cost and process cost and the increase in a production yield.

### (Solution and Aging Heat Treatment Step S7)

In a step S7, the whole of the Ni-based alloy shaped sprayed piece and the base material (i.e., the Ni-based alloy member having the shaped sprayed piece) is subjected to a solution heat treatment to solid-dissolve the γ' phase into the γ phase and also to an aging heat treatment to re-precipitate the intra-grain γ' phase particles within the γ phase crystal grains. Thereby, the shaped sprayed piece is thermally refined to a repair piece. As to conditions of the solution heat treatment and aging heat treatment, any conditions suitable for an environment where the Ni-based alloy repaired member is used can be applied. The heat treatment atmosphere is preferably a non-oxidizing atmosphere below atmospheric pressure (e.g., in nitrogen gas, argon gas or vacuum).

Meanwhile, in the step S7, it is not denied that the grain-boundary γ' phase does not disappear completely and it slightly remains. For example, if it can be secured the precipitation amount of intra-grain γ' phase for satisfying the mechanical strength required for the Ni-based alloy repaired member, the residual amount of grain-boundary γ' phase precipitation of at most 10 volume % would be allowable. In other words, the step S7 comprises: a solution heat treatment to decrease the precipitation amount of the grain-boundary γ' phase to at most 10 volume %; and an aging heat treatment to precipitate the intra-grain γ' phase of at least 30 volume %.

A small amount of the residual grain-boundary γ' phase could provide with an incidental effect improving the ductility, toughness and creep properties in a high precipitation-strengthened Ni-based alloy repaired member of the invention. Moreover, by performing this step S7, there is an additional effect of further improving the degree of adhesion (integration) between the sprayed piece and the base material.

Here, in the case that a high temperature member to be repaired consists of a unidirectional solidification article or a single crystalline solidification article (e.g., in the case of turbine rotor blades), a base material of the article has suffered creep damage of some degree due to its use in the turbine. And, the base material of the article creep-damaged to a certain level or higher often generates γ-phase recrystallized grains when subjected to a solution heat treatment. The generation of γ-phase recrystallized grains in such articles means new introduction of undesired grain boundaries and significantly deteriorates the creep properties of the base material. Therefore, such the problem should be prevented.

With respect to solution to that problem it is preferable to combine the techniques described in JP 2018-087359 A and JP 2019-112702 A. Specifically, it is preferable that the solution heat treatment of this step S7 is performed at a temperature equal to or higher than the solvus temperature of the γ' phase by 10°C and equal to or lower than the melting point of the γ phase by 10°C for a holding duration within a time range in which recrystallized grains of the γ phase do not occur. This solution heat treatment can be referred to as a solution/non-recrystallization heat treatment. Furthermore, the holding duration is preferably set equal to or more than 15 minutes and equal to or less than 2 hours according to the degree of creep damage. Through this heat treatment the generation of γ-phase recrystallized grains in the base material can be prevented.

When a GROD (grain reference orientation deviation) value of the γ phase crystal grain of the base material of the unidirectional solidification article or single crystalline solidification article undergone the solution/non-recrystallization heat treatment is measured by electron back scattering diffraction analysis, the GROD value is equal to or more than 0.4° and equal to or less than 0.6°. Also, when a rocking curve of a {200}_{γ-phase} plane of the γ phase crystal grain of the base material is measured by an X-ray diffraction technique, a full width at half maximum of the rocking curve is within a range from 0.25° to 0.30°. Furthermore, the base material subjected to the solution/non-recrystallization heat treatment has an advantage capable of recovering to a creep life of 0.95 or more compared to the creep life of a new base material.

### (Finishing/Inspection Step S8)

In a step S8, the member having undergone the solution and aging heat treatment step S7 is subjected to a finishing work and/or an appearance inspection to complete it as a repaired member. This step is not essential, but it is preferable that it be performed. The finishing work includes a TBC application, where appropriate.

Through the steps above, it is possible to obtain a Ni-based alloy member repaired using a high precipitation-strengthened Ni-based alloy material. The obtained Ni-based alloy repaired member can be preferably used for a turbine high-temperature member made of a high precipitation-strengthened Ni-based alloy material (e.g., turbine rotor blade, turbine stator blade, rotor disk, combustor member, and boiler member).

### [Ni-based Alloy Repaired Member]

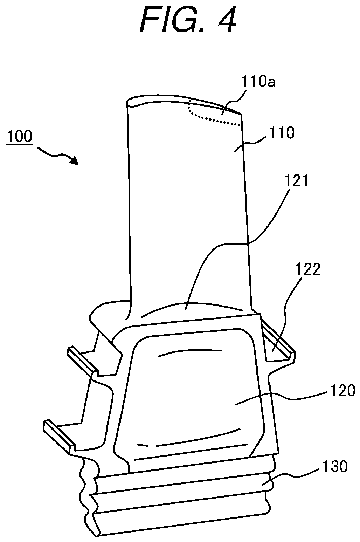

FIG. 4 is a schematic illustration showing a perspective view of an exemplary turbine rotor blade as a Ni-based alloy repaired member according to the invention. As shown in FIG. 4, the turbine rotor blade 100 includes, roughly, an airfoil 110, a shank 120, and a root 130. The shank 120 is provided with a platform 121 and radial fins 122.

In the turbine rotor blade 100 shown in FIG. 4, an airfoil repair piece 110a made of a high precipitation-strengthened Ni-based alloy material is formed on the blade 110. Here, since the airfoil repair piece 110a is formed by the above-mentioned manufacturing method, the airfoil repair piece 110a has a microstructure in which the γ phase crystal grains are equiaxed crystals having an average particle diameter of 50 µm or less. In contrast, the base material of airfoil 110 is often manufactured by precision casting and has a microstructure composed of unidirectional solidification crystals or a single crystal. That is, the base material and the repair piece in the Ni-based alloy repaired member have different microstructures from each other.

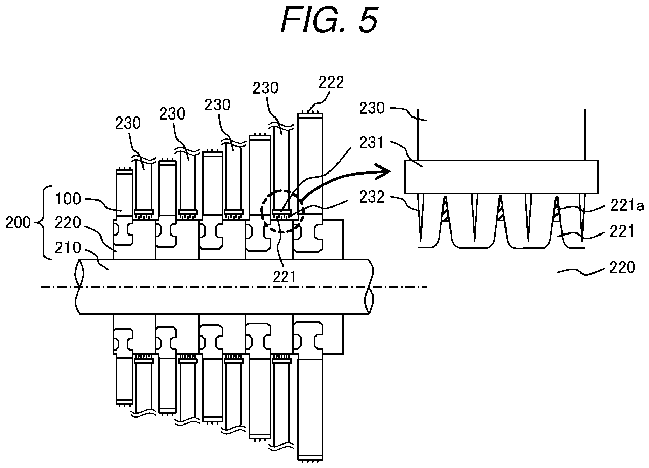

FIG. 5 is a schematic illustration showing a cross sectional view of an exemplary turbine rotor as another Ni-based alloy repaired member according to the invention. As shown in FIG. 5, the turbine rotor 200 includes, roughly, a shaft 210, rotor disks 220, and turbine rotor blades 100. The shank 120 is provided with a platform 121 and radial fins 122. In the case of a multi-stage turbine, a plurality of turbine rotor blades 100 and a plurality of turbine stator blades 230 are alternately arranged in the axial direction of the shaft 210.

In the turbine, there are provided seal fins (disc seal fins 221, and rotor blade seal-ring fins 222) for suppressing the pressure loss of the main fluid as little as possible on a surface of the rotor disk 220 facing a tip portion in the radial direction of the turbine stator blade 230 and on a tip portion in the radial direction of the turbine rotor blade 100. In the case that these seal fins are worn during turbine operation, they can be repaired by the invention with repair pieces (disc seal fin repair pieces 221a) made of a high precipitation-strengthened Ni-based alloy material. Furthermore, the rotor blade seal-ring fins 222 can be also repaired in the same manner, if necessary.

Because the disc seal fin repair pieces 221a are formed by the above-mentioned production method, they have a microstructure composed of equiaxed crystals of the γ phase having an average particle size of 50 µm or less. Since the rotor disks 220 are usually manufactured by hot forging, the base material thereof has a microstructure composed of equiaxed crystals of the γ phase. That is, both the disc seal fin repair piece 221a and the rotor disk 220 have a microstructure composed of equiaxed crystals. However, because the production processes thereof are completely different from each other, characteristics of the γ phase crystal grains, such as shape of crystal grains and average grain size, should be different from each other. In other words, the base material and the repair piece can be clearly distinguished by observing the microstructures thereof.

### (Chemical Composition of Ni-based Alloy Powder and Repair Piece)

First, as is clear from the method of forming the repair piece, the Ni-based alloy powder and the repair piece have the same chemical composition. Although it is preferable that the chemical composition of the Ni-based alloy powder/repair piece is basically the same high precipitation-strengthened Ni-based alloy as that of a high-temperature member to be repaired, there is no need to have a completely identical chemical composition. The chemical composition of the Ni-based alloy powder/repair piece may be appropriately adjusted within a range in which the equilibrium precipitation amount of the γ' phase at 700°C is 30 volume % or more and 80 volume % or less.

Specifically, a preferable chemical composition (in mass percent) is as follows: 5% to 25% of Cr; more than 0% to 30% of Co; 1% to 8% of Al; total amount of Ti, Nb and Ta of between 1% and 10%, inclusive; 10% or less of Fe; 10% or less of Mo; 8% or less of W; 0.1% or less of Zr; 0.1% or less of B; 0.2% or less of C; 2% or less of Hf; 5% or less of Re; 0.003% to 0.05% of O; and other substances (Ni and unavoidable impurities). Hereinafter, each component will be described.

The Cr component solid-dissolves in the γ phase and forms an oxide (e.g., Cr₂O₃) coating on the surface of a Ni-based alloy member in an actual use environment, thereby increasing corrosion resistance and oxidation resistance. To apply this effect onto turbine high-temperature members, it is essential to add at least 5 mass % of Cr. However, excessive adding of the Cr accelerates the formation of a harmful phase. Therefore, the Cr content is preferably 25 mass % or less.

The Co component, which is an element similar to Ni, solid-dissolves in the γ phase in substitution for Ni. The Co component can increase corrosion resistance as well as increasing creep strength. It can also decrease the γ' phase solvus temperature, thereby increasing the high-temperature ductility. However, excessive adding of the Co accelerates the formation of a harmful phase. Therefore, the Co content is preferably more than 0 mass % to 30 mass %.

The Al component is an indispensable component for forming a γ' phase that is a precipitation-strengthening phase for a Ni-based alloy. The Al component can also contribute to increase in oxidation resistance and corrosion resistance by forming an oxide (e.g., Al₂O₃) coating on the surface of a Ni-based alloy member in an actual use environment. The Al content is preferably from 1 mass % to 8 mass % according to a desired amount of γ' phase precipitation.

In the same manner as the Al component, the Ti component, the Nb component and the Ta component can also form the γ' phase and increase high-temperature strength. The Ti and Nb components can also increase corrosion resistance. However, excessive adding of those components accelerates the formation of a harmful phase. Therefore, the total amount of Ti, Nb and Ta components is preferably between 1 mass % and 10 mass %, inclusive.

When the Fe component substitutes the Co component or the Ni component, it is possible to reduce alloy material costs. However, excessive adding of the Fe accelerates the formation of a harmful phase. Therefore, the Fe content is preferably 10 mass % or less.

The Mo component and the W component solid-dissolve in the γ phase and can increase high-temperature strength. Therefore, it is preferable that either one component be added. The Mo component can also increase corrosion resistance. However, excessive adding of these components accelerates the formation of a harmful phase or deteriorates ductility and high-temperature strength. Therefore, the Mo content is preferably 10 mass % or less, and the W content is preferably 8 mass % or less.

The Zr component, the B component and the C component can strengthen the grain boundaries of the γ phase grains (i.e., strengthening of tensile strength along the direction perpendicular to the grain boundary of the γ phase grain), thereby increasing high-temperature ductility and creep strength. However, excessive adding of those components deteriorates formability and processability. Therefore, the Zr content is preferably 0.1 mass % or less, the B content is preferably 0.1 mass % or less, and the C content is preferably 0.2 mass % or less.

The Hf component can increase oxidation resistance. However, excessive adding of the Hf accelerates the formation of a harmful phase. Therefore, the Hf content is preferably 2 mass % or less.

The Re component can contribute to the solid solution strengthening of the γ phase and increase corrosion resistance. However, excessive adding of the Re accelerates the formation of a harmful phase. Furthermore, since the Re is an expensive element, increase of the additive amount will result in increase of alloy material costs. To avoid this disadvantage, the Re content is preferably 5 mass % or less.

The O component is usually treated as an impurity and an attempt is often made to reduce the O component. However, in the invention, as stated before, the O component is an indispensable component to suppress the growth of the γ phase grains and facilitate the formation of the grain-boundary γ' phase particles. The content of the O component is preferably between 0.003 mass % and 0.05 mass %.

Residual components of the Ni-based alloy material are the Ni component and unavoidable impurities other than the O component. For example, unavoidable impurities are N (nitrogen), P (phosphorus), and S (sulfur).

### EXAMPLES

Hereinafter, the present invention will be described in more detail with reference to a variety of experiments.

### [Experiment 1]

### (Fabrication of Ni-based Alloy Powder)

First, each master ingot (10 kg) was prepared by mixing, melting and casting raw materials to have a desired chemical composition. Melting was performed by means of a vacuum induction melting technique. Next, the obtained master ingot was re-molten and a Ni-based alloy powder was prepared by means of a gas atomization technique while the oxygen partial pressure in the atomization atmosphere was controlled, thus obtaining Ni-based alloy powders P-1 to P-6 (each having an average particle diameter of 50 µm). The chemical compositions of the obtained Ni-based alloy powders P-1 to P-6 are shown in TABLE 1.

**TABLE 1 Chemical compositions of Ni-based alloy powders P-1 to P-6.**

| Alloy powder | Chemical composition (mass %) | | | | | | | | | | | | | | | |
|---|---|---|---|---|---|---|---|---|---|---|---|---|---|---|---|---|
| | Cr | Co | Al | Ti | Nb | Ta | Fe | Mo | W | Zr | B | C | Hf | Re | O | Ni |
| P-1 | 15.7 | 8.4 | 2.3 | 3.4 | 1.1 | - | 4.0 | 3.1 | 2.7 | - | 0.011 | - | - | - | 0.010 | Bal. |
| P-2 | 15.6 | 14.6 | 2.6 | 5.1 | - | - | - | 3.0 | 1.2 | 0.03 | 0.030 | 0.008 | - | - | 0.013 | Bal. |
| P-3 | 15.0 | 18.5 | 3.0 | 3.6 | 1.1 | 2.0 | - | 5.0 | - | 0.06 | 0.015 | 0.027 | 0.5 | - | 0.011 | Bal. |
| P-4 | 11.5 | 15.7 | 4.4 | 4.4 | - | - | - | 6.5 | - | 0.03 | 0.015 | 0.015 | 0.5 | - | 0.010 | Bal. |
| P-5 | 13.8 | 6.8 | 4.0 | 3.3 | 1.2 | 2.8 | - | 1.8 | 4.0 | - | 0.015 | 0.014 | - | 1.0 | 0.014 | Bal. |
| P-6 | 19.6 | 13.5 | 1.3 | 3.0 | - | - | - | 4.2 | - | - | 0.005 | 0.075 | - | - | 0.007 | Bal. |

| | | | | | | | | | | | | | | | | |
|---|---|---|---|---|---|---|---|---|---|---|---|---|---|---|---|---|
| -: This symbol means that the component was intentionally excluded. Bal.: This symbol means that unavoidable impurities other than the O component are included. | | | | | | | | | | | | | | | | |

### [Experiment 2]

### (Fabrication of Ni-based Alloy Sprayed Piece)

Spray pieces were deposited and formed on base material plates by a high-velocity oxy-fuel (HVOF) spraying method or a low-pressure plasma spraying (LPPS) method using the Ni-based alloy powders P-1 to P-5 prepared in Experiment 1. As the base material plates, high precipitation-strengthened Ni-based alloy plates were used. In the LPPS method, an alloy powder is ejected in a completely molten state, and a sprayed piece is deposited while the alloy droplets flying to a base material adhere and solidify thereon.

### (Investigation of Ni-based Alloy Sprayed Piece)

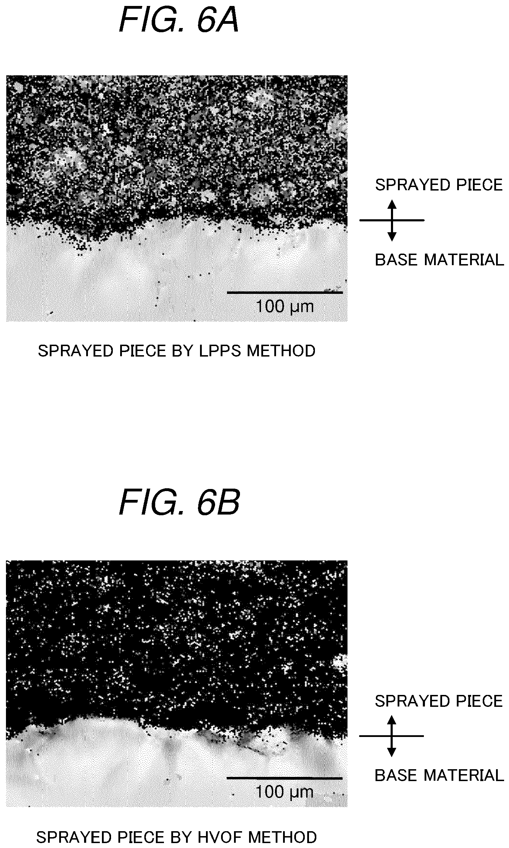

FIG. 6A is an electron back scattered diffraction (EBSD) pattern in a cross section of a sprayed piece deposited by means of the LPPS method using the alloy powder P-1; and FIG. 6B is another EBSD pattern in a cross section of another sprayed piece deposited by means of the HVOF method using the alloy powder P-1. In FIGs. 6A and 6B, black region means a region where the crystal orientation cannot be determined.

As shown in FIG. 6A, in the sprayed piece deposited by the LPPS method, the size of each crystal grain is sufficiently small, but many crystal grains are in a state where the crystal orientation can be determined. A crystal grain in a state capable of determining the crystal orientation means a state in which the strain inside the crystal grain is small (crystal grain with a small internal strain). It can be considered that since the completely molten alloy droplets adhere and solidify in the LPPS method, grains crystallize to reduce the internal strain therein.

In contrast, in the sprayed pieces deposited by the HVOF method, each crystal grain is sufficiently small and the crystal orientation thereof can hardly be determined, as shown in FIG. 6B. This strongly suggests that a large amount of internal strain is accumulated in each crystal grain, and it can be considered that each of the flying powder particles is large plastically deformed by the large collision energy in the HVOF method.

Next, after the sprayed pieces as shown in FIGs. 6A and 6B were heated above the γ' phase solvus temperature, the microstructures of recrystallized crystal grains of the γ phase were investigated. Specifically, the sprayed pieces were heated up to a temperature higher by 20°C (1102 + 20°C) than the γ' phase solvus temperature and held for 30 minutes. After that, the microstructure observation was conducted.

As a result, in the sprayed pieces deposited by the HVOF method, while the γ phase crystal grains recrystallized, the size of each crystal grain maintained the state just after deposited (average particle diameter of 50 µm or less). It can be considered that such result is based on the pinning of the crystal grain boundaries due to the oxygen component contained in the alloy powder and the large plastic deformation of particles due to high-speed collision of the solid-state powder particles.

In contrast, in the sprayed pieces formed by the LPPS method, while the γ phase crystal grains recrystallized, the average particle diameter of the γ phase crystal grains was coarsened to over 50 µm. The reason for this is considered that since in the LPPS method powder particles in a completely molten state are adhered and deposited, the oxygen components contained in the alloy powder are prone to aggregate and segregate during solidification of the alloy droplets, resulting in deteriorating the pinning effect of the γ phase grain boundaries.

From the above-described investigations, it is confirmed that in order to maintain the recrystallized grains of the γ phase in a fine state, a high-speed collision spraying process in which powder particles are adhered and deposited in a solid state is preferable as a method for forming sprayed pieces.

Furthermore, it is separately confirmed that similar microstructures as in FIGs. 6A and 6B can be obtained in the sprayed pieces formed by means of the LPPS method or the HVOF method using the other alloy powders P-2 to P-5.

In addition, a room-temperature Vickers hardness on a surface of each sprayed piece formed was measured with a micro Vickers hardness tester (Akashi Seisakusho, Ltd., model: MVK-E). As a result, the sprayed pieces formed by the LPPS method showed the room-temperature Vickers hardness of 400 to 500 Hv. In contrast, the sprayed pieces formed by the HVOF method exhibited the room-temperature Vickers hardness of 800 to 900 Hv. It is considered that this difference in hardness is based on a difference in the accumulation of internal strain in each crystal grain due to a difference in the method for depositing the sprayed pieces.

### [Experiment 3]

### (Fabrication of Ni-based Alloy Softened Sprayed Piece)

In order to investigate characteristics of a softened sprayed piece obtained by softening the sprayed piece, first, a sprayed piece of a simple substance was prepared. A cylindrical sprayed piece (diameter of 20 mm) as a test sample for a softened sprayed piece was cut out from the Ni-based alloy sprayed piece formed by the HVOF method in Experiment 2 by electrical discharge machining. Another Ni-based alloy sprayed piece was formed by the HVOF method using the alloy powder P-6 prepared in Experiment 1, and then subjected to electrical discharge machining to cut out a similar 20 mm diameter cylindrical sprayed piece.

Next, the sprayed pieces were subjected to a softening heat treatment under the heat treatment conditions (e.g., slow-cooling start temperature, and cooling rate during the slow-cooling process) shown in Table 2 described later, thereby preparing the Ni-based softened sprayed pieces of Examples 1 to 5 and Comparative examples 1 to 6. The slow-cooling end temperature was set to 950°C except for Comparative examples 1 and 4. And, Comparative examples 1 and 4 were quenched from the slow-cooling start temperature to a room temperature by gas cooling.

### (Investigation of Ni-based Alloy Softened Sprayed Piece)

As for each of the Ni-based alloy softened sprayed pieces obtained above, observation of the microstructure (precipitation amount of the grain-boundary γ' phase), measurement of the room-temperature Vickers hardness, and evaluation of formability/processability were performed. Specifications and evaluation results of the Ni-based alloy softened sprayed pieces are shown in TABLE 2. Meanwhile, in TABLE 2, the equilibrium amount of precipitation of the γ' phase at 700°C and the γ' phase solvus temperature were obtained by the thermodynamic calculation based on the alloy composition shown in TABLE 1.

The amount of precipitation of the grain-boundary γ' phase was measured by the electron microscopy observation and the image analysis (ImageJ). The room-temperature Vickers hardness of the softened sprayed pieces was measured by means of the micro-Vickers hardness meter as in Experiment 2. In the evaluation of formability/processability, the room-temperature Vickers hardness of 390 Hv or less was judged to be "Passed", and the room-temperature Vickers hardness of more than 390 Hv was judged to be "Failed".

**TABLE 2 Specifications and evaluation results of Ni-based alloy softened sprayed pieces of Examples 1 to 5 and Comparative examples 1 to 6.**

| Softened sprayed piece | Alloy powder | γ' phase equilibrium precipitation at 700°C (vol. %) | γ' phase solvus temperature (°C) | Slow-cooling start temperature based on γ' phase solvus temperature (°C) | Cooling rate during slow-cooling process (°C/h) | Grain-boundary γ' phase precipitation (vol. %) | Room-temperature Vickers hardness (Hv) | Formability/ processability |
|---|---|---|---|---|---|---|---|---|
| Example 1 | P-1 | 38 | 1102 | +30 | 50 | 25 | 306 | Passed |
| Example 2 | P-2 | 47 | 1160 | +20 | 100 | 34 | 310 | Passed |
| Example 3 | P-3 | 50 | 1173 | +10 | 10 | 40 | 330 | Passed |
| Example 4 | P-4 | 61 | 1193 | +10 | 10 | 48 | 320 | Passed |
| Example 5 | P-5 | 61 | 1193 | +20 | 100 | 49 | 341 | Passed |
| Comparative example 1 | P-1 | 38 | 1102 | +30 | > 1000 | 0 | 408 | Failed |
| Comparative example 2 | P-2 | 47 | 1160 | -150 | 50 | 4 | 413 | Failed |
| Comparative example 3 | P-3 | 50 | 1173 | -100 | 100 | 7 | 406 | Failed |
| Comparative example 4 | P-4 | 61 | 1193 | +20 | > 1000 | 0 | 468 | Failed |
| Comparative example 5 | P-5 | 61 | 1193 | -100 | 200 | 8 | 403 | Failed |
| Comparative example 6 | P-6 | 24 | 1010 | +10 | 100 | 2 | 293 | Passed |

As shown in TABLE 2, in the softened sprayed pieces according to Comparative examples 1 to 5 in which the cooling rate during the slow-cooling process of the softening heat treatment is outside of the invention, the precipitation amount of the grain-boundary γ' phase is less than 20 volume % (instead, coarsened intra-grain γ' phase particles were detected), and the room-temperature Vickers hardness is more than 390 Hv. As a result, the formability/processability is failed. When the slow-cooling start temperature in the softening heat treatment is too low and/or the cooling rate during the slow-cooling process is too high, the grain-boundary γ' phase rarely precipitates and grows. Therefore, it is confirmed that formability and processability cannot be sufficiently ensured.

Contrary to Comparative examples 1 to 5, in the softened sprayed pieces according to Examples 1 to 5, any specimen under test has the precipitation amount of the grain-boundary γ' phase of 20 volume % or more and the room-temperature Vickers hardness of 390 Hv or less. As a result, the formability/processability is passed.

Meanwhile, in the softened sprayed piece according to Comparative example 6 in which the equilibrium amount of precipitation of the γ' phase at 700°C is outside of the invention, the equilibrium amount of the γ' phase precipitation is less than 30 volume %. This softened sprayed piece is not applicable to the high precipitation-strengthened Ni-based alloy materials prescribed by the invention. However, since the precipitation amount of the γ' phase is small, there is no particular problem in the formability/processability.

### [Experiment 4]

### (Fabrication and Evaluation of Ni-based Alloy Repair Piece)

The softened sprayed pieces according to Examples 1 to 5 and Comparative example 6, whose formability/processability is acceptable, were subjected to a drawing working to a diameter of 10 mm with a drawing machine in the room temperature atmosphere, thus preparing shaped sprayed pieces. Next, the shaped sprayed pieces were subjected to the solution and aging heat treatment process, thereby fabricating the Ni-based alloy repair pieces according to Examples 1 to 5 and Comparative example 6. The solution heat treatment was conducted at a temperature 20°C higher than the γ' phase solvus temperature, and the aging heat treatment was conducted at a temperature of 700°C.

The obtained Ni-based alloy repair pieces according to Examples 1 to 5 and Comparative example 6 were subjected to a high-temperature tensile test at 700°C. The repair piece with a tensile strength of at least 1000 MPa is judged to be "Passed" and the repair piece with a tensile strength of less than 1000 MPa is judged to be "Failed". As a result, all the Ni-based alloy repair pieces according to Examples 1 to 5 were passed, but the Ni-based alloy repair piece according to Comparative example 6 was failed. From these results, it is confirmed that the Ni-based alloy repair pieces of Examples 1 to 5 exhibit the mechanical properties expected as a high precipitation-strengthened Ni-based alloy material.

Based on the above various experiments, by applying the manufacturing method according to the invention, it is confirmed that even a sprayed piece made of a high precipitation-strengthened Ni-based alloy material can be thermally refined to a softened sprayed piece having excellent formability and processability. It is also confirmed that by applying the solution and aging heat treatment to a shaped sprayed piece, the shaped sprayed piece can be thermally refined to a repair piece exhibiting inherent mechanical properties as a high precipitation-strengthened Ni-based alloy material. This makes it possible to provide a Ni-based alloy repaired member using a high precipitation-strengthened Ni-based alloy material at low cost.

## Claims

1. A manufacturing method of a Ni-based alloy repaired member in that a repair piece is formed at a damaged portion of a base material, each of the base material and the repair piece being made of a Ni-based alloy having a chemical composition in which the equilibrium amount of precipitation of a γ' phase precipitating in a γ phase of matrix at 700°C is 30 volume % or more and 80 volume % or less,
the manufacturing method comprising:
a damaged portion surface preparation step for preprocessing a surface of the damaged portion;
an alloy powder preparation step for preparing a Ni-based alloy powder having the chemical composition;
a sprayed piece deposition step for depositing/forming a sprayed piece on the damaged portion by a high-speed collision spraying process using the Ni-based alloy powder;
a softening heat treatment step for heating the sprayed piece to a temperature equal to or higher than the solvus temperature of the γ' phase but lower than the melting temperature of the γ phase, and then slow-cooling the heated sprayed piece from the temperature to a temperature at least 50°C lower than the γ' phase solvus temperature at a cooling rate of 100°C/h or lower, so that the sprayed piece is thermally refined to a softened sprayed piece in that particles of the γ' phase at least 20 volume % precipitate on grain boundaries of the γ phase grains having an average grain diameter of 50 µm or less;
a shaping step for processing the softened sprayed piece into a shaped sprayed piece with a desired shape by cold plastic working, warm plastic working and/or machining; and
a solution and aging heat treatment step for subjecting whole of the shaped sprayed piece and the base material to a solution heat treatment so as to solid-dissolve the γ' phase into the γ phase and subsequently subjecting it to an aging heat treatment so as to precipitate particles of the γ' phase of at least 30 volume % within the γ phase grains, so that the shaped sprayed piece is thermally refined to the repair piece.

2. The manufacturing method according to claim 1, wherein
the high-speed collision spraying process is a high velocity oxy-fuel spraying, a high velocity air-fuel spraying or a cold spraying.

3. The manufacturing method according to claim 1 or 2, wherein
the softened sprayed piece has a Vickers hardness of 390 Hv or less at a room temperature.

4. The manufacturing method according to any one of claims 1 to 3, wherein
the alloy powder preparation step includes an atomization substep for forming the Ni-based alloy powder.

5. The manufacturing method according to any one of claims 1 to 4, wherein
the chemical composition of the repair piece is:
5 mass % to 25 mass % of Cr,
more than 0 mass % to 30 mass % of Co,
1 mass % to 8 mass % of Al,
1 mass % to 10 mass % of Ti, Nb and Ta in total,
10 mass % or less of Fe,
10 mass % or less of Mo,
8 mass % or less of W,
0.1 mass % or less of Zr,
0.1 mass % or less of B,
0.2 mass % or less of C,
2 mass % or less of Hf,
5 mass % or less of Re,
0.003 mass % to 0.05 mass % of O, and
residual components of Ni and unavoidable impurities.

6. The manufacturing method according to any one of claims 1 to 5, wherein
each of the base material and the repair piece has a chemical composition in which the solvus temperature of the γ' phase is 1110°C or higher.

7. The manufacturing method according to claim 6, wherein
each of the base material and the repair piece has a chemical composition in which the equilibrium amount of precipitation of the γ' phase at 700°C is 45 volume % or more and 80 volume % or less.

8. The manufacturing method according to any one of claims 1 to 7, wherein
the based material is a unidirectional solidification article or a single crystalline solidification article comprising the γ phase, and
the solution heat treatment is a solution/non-recrystallization heat treatment in which the whole of the shaped sprayed piece and the base material is held at a temperature at least 10°C higher than the solvus temperature of the γ' phase but not higher than a temperature that is 10°C lower than the melting point of the γ phase, for a holding duration within a time range in which recrystallized grains of the γ phase do not generate.

9. The manufacturing method according to claim 8, wherein
the holding duration in the solution/non-recrystallization heat treatment step is within a range from 15 minutes to 2 hours.

10. A Ni-based alloy repaired member having a repair piece formed at a damaged portion of a base material, each of the base material and the repair piece being made of a Ni-based alloy having a chemical composition in which the equilibrium amount of precipitation of a γ' phase precipitating in a γ phase of matrix at 700°C is 30 volume % or more and 80 volume % or less,
wherein the base material and the repair piece have different microstructures from each other, in the microstructure of the repair piece crystal grains of the γ phase being equiaxed crystal grains having an average grain diameter of 50 µm or less.

11. The Ni-based alloy repaired member according to claim 10, wherein
the chemical composition of the repair piece is:
5 mass % to 25 mass % of Cr,
more than 0 mass % to 30 mass % of Co,
1 mass % to 8 mass % of Al,
1 mass % to 10 mass % of Ti, Nb and Ta in total,
10 mass % or less of Fe,
10 mass % or less of Mo,
8 mass % or less of W,
0.1 mass % or less of Zr,
0.1 mass % or less of B,
0.2 mass % or less of C,
2 mass % or less of Hf,
5 mass % or less of Re,
0.003 mass % to 0.05 mass % of O, and
residual components of Ni and unavoidable impurities.

12. The Ni-based alloy repaired member according to claim 10 or 11, wherein
each of the base material and the repair piece has a chemical composition in which the solvus temperature of the γ' phase is 1110°C or higher.

13. The Ni-based alloy repaired member according to claim 12, wherein
each of the base material and the repair piece has a chemical composition in which the equilibrium amount of precipitation of the γ' phase at 700°C is 45 volume % or more and 80 volume % or less.

14. The Ni-based alloy repaired member according to any one of claims 10 to 13, wherein
the based material is a unidirectional solidification article or a single crystalline solidification article comprising the γ phase.

15. The Ni-based alloy repaired member according to claim 14,
wherein no recrystallized grains of the γ phase are present in a microstructure of the base material, and
wherein when a GROD (grain reference orientation deviation) value of crystal grains of the γ phase of the base material is measured by electron back scattering diffraction analysis, the GROD value is equal to or more than 0.4° and equal to or less than 0.6°.

16. The Ni-based alloy repaired member according to claim 14,
wherein no recrystallized grains of the γ phase are present in a microstructure of the base material, and
wherein when a rocking curve of a {200}_{γ-phase} plane of the γ phase crystal grain of the base material is measured by an X-ray diffraction technique, a full width at half maximum of the rocking curve is within a range from 0.25° to 0.30°.
